# EUROPÄISCHE PATENTSCHRIFT

(11) **EP 2 095 015 B1**
(45) Veröffentlichungstag und Bekanntmachung des Hinweises auf die Patenterteilung: **13.06.2012**
(21) Anmeldenummer: 07819187.1
(22) Anmeldetag: 22.10.2007
(51) Int. Cl.: F21K 99/00, F21S 10/02, G02B 6/00

(54) **STRUKTURIERTES FLACHGLAS**
STRUCTURED FLAT GLASS
VERRE PLAT STRUCTURÉ

(30) Priorität: 22.11.2006 DE 202006017775 U
(43) Veröffentlichungstag der Anmeldung: 02.09.2009
(73) Patentinhaber: Kaiser, Karl, 56357 Oberwallmenach (DE)
(72) Erfinder: Kaiser, Karl, 56357 Oberwallmenach (DE)
(74) Vertreter: Plate, Jürgen
(86) Internationale Anmeldenummer: PCT/EP2007/009122
(87) Internationale Veröffentlichungsnummer: WO 2008/061599

(56) Entgegenhaltungen:
- EP-A- 0 945 674
- WO-A-02/095287
- WO-A-03/095234
- DE-A- 10 322 561
- DE-A1- 19 743 719
- GB-A- 147 076
- GB-A- 2 401 472
- US-A- 5 369 553
- US-A- 5 965 221
- US-A1- 2005 219 860

## Beschreibung

Die Erfindung betrifft ein strukturiertes Flachglas, bei dem ein Teil des Flachglases eine konvexe Struktur aufweist und der übrige Teil gering strukturiertes, beinahe glattes Flachglas ist.

Aus dem Gebrauchsmuster DE 201 10 982 sind teilstrukturierte Flachgläser bekannt, die nur über einen Teil ihrer Fläche mit einer in die Rückseite eingeprägten konvexen Struktur versehen sind, während der übrige Teil der Flachgläser glasklar ist.

Herkömmliches Flachglas erweicht ab etwa 580 °C und kann mittels Prägewalzen strukturiert werden. Eine weitere Möglichkeit der Strukturierung besteht darin, das erwärmte Flachglas im Schmelzofen auf eine strukturierte Unterlage zu legen, deren Struktur aufgrund der Schwerkraft, ab etwa Temperaturen von 750 °C bis 950 °C, sich in das Flachglas einträgt.

Glas ist physikalisch gesehen eine unterkühlte Flüssigkeit mit amorpher Struktur. Der Hauptbestandteil von üblichen Gläsern ist mit 60 bis 80 Gew.-% Siliziumdioxid. Beim Erhitzen und Schmelzen wird Glas zunächst zähflüssig und geht allmählich in einen flüssigen Zustand über. Dabei wird Glas zu einem transparenten Material. Wird Glas abgekühlt, so erstarren die Moleküle und bilden eine unregelmäßige Konfiguration, die keinen kristallinen Aufbau und keinen fest definierten Schmelzpunkt besitzt.

Aus der EP 0 900 971 B ist eine Beleuchtungsvorrichtung aus Leuchtdioden bekannt, die auf einer glasklaren Glasplatte befestigt sind. Die Leiterbahnen und die Anschlüsse für die Leuchtdioden sind als elektrisch leitende, dünne, nahezu unsichtbare Schichten auf der Glasplatte aufgebracht. Diese Beleuchtungsvorrichtung ist in einer Vitrine derart eingebaut, dass die Glasplatte als Zwischenboden in der Vitrine eingesetzt ist, wobei die Leuchtdioden auf der Unterseite der Glasplatte angebracht sind.

Aus dem Katalog "CR Systeme aus Glas" der Firma CRISTALUX Kirchberger Glas GmbH & Co. KG, 55477 Kirchberg, Stand Januar 2006, sind sogenannte LED-Glasinnentüren bekannt, die weiß/blau-strahlende Leuchtdioden in mittiger, geradliniger, leicht gekrümmter Anordnung oder als Quadrate aus 9 LED's in einer glasklaren Glastür aufweisen. Diese Leuchtdioden bilden singuläre Lichtquellen, die vor Ort strahlen. Eine Ausleuchtung der gesamten Glasinnentür durch die singulären Lichtquellen ist nicht möglich.

Die DE 103 22 561 offenbart ein Flachglas, welches Einprägungen als gefräste Struktur aufweist, um das Licht, welches stirnseitig in das Flachglas eingeleitet wird, auszukoppeln und so unterschiedliche Figuren zu erzeugen.

Die GB 2 401 472 offenbart ein strukturiertes Flachglas und Leuchtdioden für Beleuchtungszwecke, bei dem ein Teil des Flachglases eine konvexe eingeprägte Struktur aufweist und zumindest an einer der Außenkanten des Flachglases die Leuchtdioden angeordnet sind, deren Strahlung in das Innere des Flachglases auf die konvexe eingeprägte Struktur gerichtet ist.

Aufgabe der Erfindung ist es, ein strukturiertes Flachglas im Bereich seiner konvexen Struktur voll auszuleuchten und großflächige Beleuchtungseffekte in der konvexen Struktur zu erhalten.

Diese Aufgabe wird erfindungsgemäß dadurch gelöst, dass die konvexe Struktur in die Rückseite des Flachglases eingeprägt ist und dass zumindest an einer der Außenkanten des Flachglases Leuchtdioden angeordnet sind, deren Strahlung in das Innere des Flachglases auf die konvexe Struktur gerichtet ist.

In Ausgestaltung der Erfindung sind die Leuchtdioden auf einer an sich bekannten LED-Schiene angeordnet, die an einer der Außenkanten des Flachglases befestigt bzw. mit der Außenkante verbunden ist. Dabei ist bei einem rechteckigen oder quadratischen Flachglas je eine LED-Schiene an zwei sich gegenüberliegenden Außenkanten angebracht.

Zur Erzielung einer sehr starken Beleuchtung bzw. Ausleuchtung der Struktur sind an drei oder an allen vier Außenkanten LED-Schienen angeordnet.

Es ist insbesondere vorgesehen, das strukturierte Flachglas in Form einer Glastür, eines Glasfensters, Wandverkleidungsplatte, Tischplatte, eines Leuchtobjektes, eines Kunstgegenstandes, eines Glaswaschtisches, einer Umrandung von Spiegeln, einer Bodenplatte, von Glastreppenstufen, einzusetzen.

Weitere Ausgestaltungen der Erfindung sind in den übrigen Unteransprüchen beschrieben.

Die Erfindung wird im Folgenden anhand von zeichnerisch dargestellten Ausführungsbeispielen näher erläutert. Es zeigen:
- Figur 1: in Frontansicht ein strukturiertes Flachglas,
- Figur 2: ein strukturiertes Flachglas mit zwei Leuchtdioden-Schienen an den sich gegenüberliegenden Außenkanten,
- Figur 3: ein strukturiertes Flachglas mit Leuchtdioden-Schienen an den beiden Außenkanten und der Oberkante, und
- Figur 4: in Seitenansicht einen Schnitt durch ein strukturiertes Flachglas, mit einer auf der Oberkante befestigten LED-Schiene.

Werden Lichtstrahlen in die Kante einer Glasscheibe (Fensterglas) eingestrahlt, so geht deren Strahlung durch die Scheibe hindurch und tritt an der gegenüber liegenden Kante wieder aus, ohne dass die Glasscheibe in der Draufsicht deutlich sichtbar erhellt würde. Der Grund hierfür ist, dass sich das Licht überwiegend gradlinig ausbreitet und an der Innenseite des Glases nur geringfügig reflektiert wird, aber weder gebeugt noch gestreut wird.

Wird durch Schleifen, Fräsen, Ätzen oder Sandstrahlen die Oberfläche des Scheibe bearbeitet, so werden die in die Kante eintretenden Lichtstrahlen am glatten Durchscheinen der Scheibe gehindert, an der bearbeiteten Stelle gebrochen und teilweise nach Außen auf die Glasoberfläche gelenkt, was mit einem Aufleuchten in der Draufsicht auf die Scheibe verbunden ist. Das Schleifen oder Fräsen produziert zunächst einmal gleiche Resultate wie Sandstrahlen oder Ätzen. Eine matte, opake Oberfläche liefert, mit Polieren verbunden, bessere Ergebnisse. Durch die Glastransparenz, die durch Polieren wieder entsteht, kann sich ein Großteil des eingestrahlten Lichts wieder ausbreiten. Es ist somit möglich, größere Glasflächen mit Strukturen, Buchstaben, Zahlen usw. zu versehen und diese zum Leuchten zu bringen.

Beim Sandstrahlen und Ätzen werden die erzeugten Strukturen allerdings milchig weiß und das Eindringen in die Glasscheibe sehr ungleichmäßig, so dass das ankommende Licht an dieser Stelle sehr stark in alle Richtungen diffus gestreut und an die Oberfläche der Scheibe geleitet wird. Das Ergebnis ist ein sehr helles, opakes Aufleuchten der geätzten oder sandgestrahlten Strukturen, die allerdings auch sehr viele Lichtstrahlen so stark absorbieren, dass es nicht möglich ist, mehr als maximal 20 cm (hängt von der Struktur ab) der Scheibe, von der Kante aus gerechnet, auszuleuchten. Schleifen bzw. Fräsen verbunden mit Polieren ist ein sehr aufwändiges Verfahren, das auch gestalterisch sehr begrenzt ist.

Eine Alternative zu den genannten Verfahren bietet das sogenannte glassfussing oder Glasschmelzverfahren. Bei diesem Verfahren wird Flachglas in einem Ofen zwischen 750 °C und 950 °C normalerweise in einer Form geschmolzen, so dass die durch die Form festgelegte Struktur, Buchstaben usw. sich später erhaben auf der Glasoberfläche der Vorderseite befinden. Beleuchtet man eine solche Glasscheibe über die Kante, geht das Licht wegen der geradlinigen Ausbreitung an der von der Vorderseite aus betrachteten erhabenen Struktur vorbei.

Legt man allerdings eine Glasscheibe auf eine teilweise erhabene Form, so drückt sich diese unter Einfluss von Hitze und Schwerkraft sehr deutlich in die Rückseite der Glasscheibe ein und zwar so, dass das Glas an dieser Stelle seine Transparenz kaum verliert. An den nicht erhabenen Stellen der Form bleibt die Glasoberfläche relativ glatt, d. h. nur sehr gering strukturiert, so dass sich das durchgeschickte Licht an den gering strukturierten Stellen nicht oder nur wenig brechen kann, während es sich mit fast voller Leuchtstärke an der eingeprägten Struktur bricht und an deren Strukturoberfläche austritt, wodurch diese intensiv ausgeleuchtet wird.

Wegen der guten Transparenz der Struktur steht einer weiteren Ausbreitung des Lichtes nichts im Wege, so dass größere Flächen mit relativ vielen Strukturen ausgeleuchtet werden können (z. B. eine Glastür).

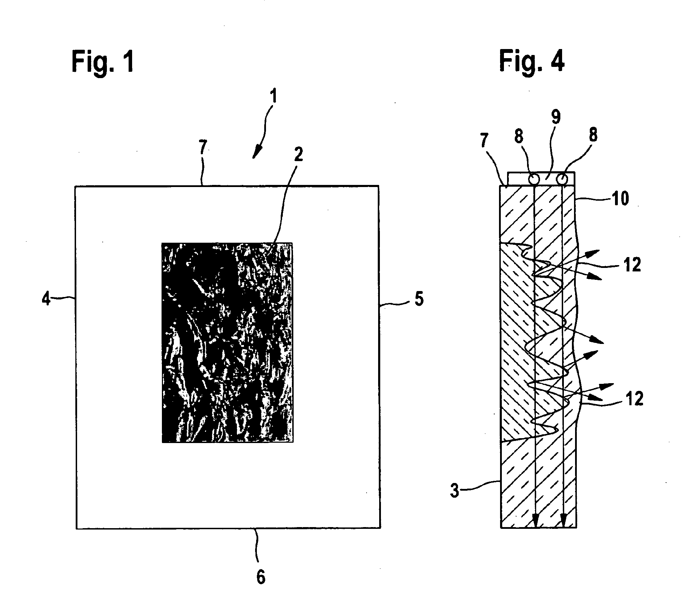

In Fig. 1 ist ein strukturiertes Flachglas 1 in Rechteckform dargestellt. Selbstverständlich kann das strukturierte Flachglas auch Quadratform haben, ebenso sind auch Trapez-, Rhombus- oder Rautenformen denkbar. Das strukturierte Flachglas 1 weist im Inneren eine Struktur 2 auf, die weitgehend transparent ist. Das zwischen der Struktur 2 und den Außenkanten 4, 5, 6, 7 befindliche Flachglas ist transparent und nur sehr gering strukturiert. Unter transparent ist die Eigenschaft zu verstehen, dass das Material Licht passieren lässt.

Wie Fig. 4 zeigt, ist die Struktur 2 in die Rückseite 3 des Flachglases eingeprägt und bildet, betrachtet von der Vorderseite 10 des Flachglases aus, eine konvexe Struktur. Auf der Vorderseite 10 des Flachglases 1 befinden sich geringe konvexe Erhebungen 12, die durch die Einprägungen der Struktur 2 verursacht sind. Die Vorderseite 10 ist dem Betrachter zugewandt. Die Struktur 2 ist schematisch dargestellt, ebenso wie die Strahlen zweier Reihen von Leuchtdioden 8, die durch zwei vertikale Pfeile angedeutet sind. An den Übergängen Glas/Luft der Struktur 2 kommt es zu Beugungen und Reflexionen der Strahlen in Richtung Vorderseite 10 des Flachglases.

Auf einer Oberkante 7 des Flachglases 1 befindet sich eine LED-Schiene 9, die in zwei Reihen eine Anzahl von Leuchtdioden 8 enthält, deren Strahlengänge vertikal nach unten in das Innere des strukturierten Flachglases 1 gerichtet sind. Die Strahlungen der Leuchtdioden werden an der Struktur 2 zum Teil gebeugt, gestreut und auch total reflektiert, wobei der Großteil der gebeugten und gestreuten Strahlen in Richtung Vorderseite 10 austritt. Auf diese Weise wird die Struktur 2 weitgehend ausgeleuchtet und dadurch entstehen besondere Beleuchtungseffekte.

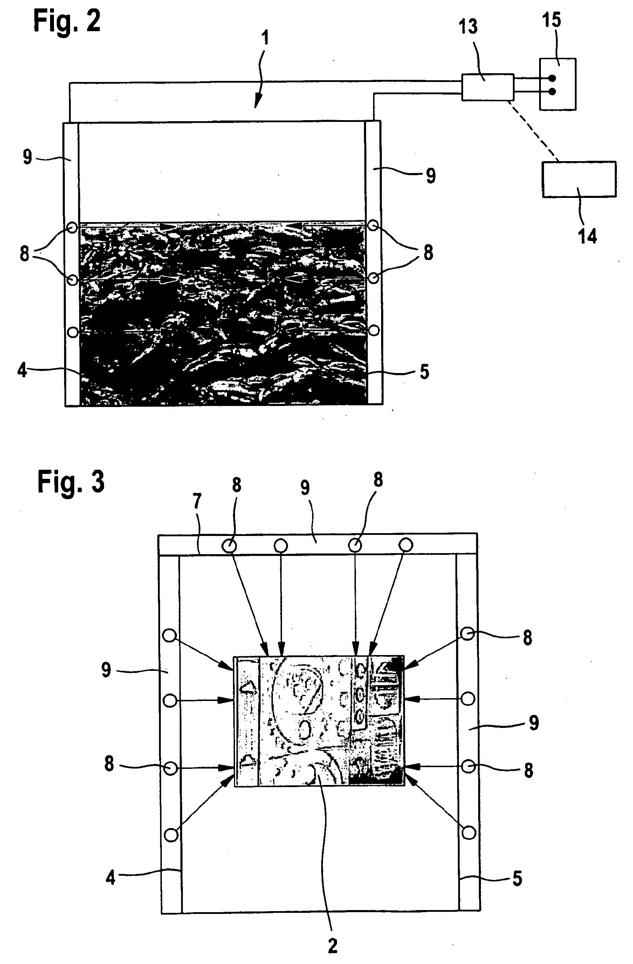

Die Struktur 2 hat die Form eines Landschaftsbildes, eines Familienwappens, von Initialien, einer Gemme, bei der das Bildmotiv in der Flachglas eingeprägt ist, von regel- oder unregelmäßigen Mustern aus Streifen, Punkten, Geraden, zusammenhängenden und/oder diskreten Flächenstücken. Der Ausgestaltung der Struktur 2 sind keine Grenzen gesetzt. Sie hängt ausschließlich vom kreativen Gestaltungswillen und -können des Designers der Struktur 2 ab. Die Struktur 2 kann beispielsweise mittig im Flachglas 1 angeordnet sein, wie in den Figuren 1 und 3 dargestellt ist oder wie in Fig. 2 gezeigt, eine Teilfläche bilden, die sich über die volle Breite des Flachglases erstreckt. Obwohl nicht dargestellt, ist auch eine Form realisierbar, bei der die Gesamtfläche des Flachglases stark strukturiert ist. In Fig. 2 ist diejenige Teilfläche außerhalb der Struktur 2 entweder leicht strukturiert oder glasklar. Im letzeren Fall handelt es sich um ein teilstrukturiertes Flachglas wie in dem Gebrauchsmuster DE 201 10 982 beschrieben.

Das strukturierte Flachglas 1 kann durch entsprechende Zusätze von Metall, Metalloxiden oder Glas- und keramische Farben bei der Herstellung des Glases gefärbt werden.

In Fig. 2 ist ein strukturiertes Flachglas 1 dargestellt, bei dem je eine LED-Schiene 9 mit einer Anzahl von Leuchtdioden 8 an den zwei sich gegenüber liegenden Außenkanten 4, 5 angebracht sind. Die Strahlengänge der Leuchtdioden 8 verlaufen parallel zu einander und horizontal in das Innere des Flachglases 1 und treffen von zwei Seiten her auf die Struktur 2 auf. In Fig. 2 ist schematisch angedeutet, dass eine Stromversorgungseinrichtung 13, die an eine Netzversorgung 15 angeschlossen ist, die Leuchtdioden mit elektrischer Energie beliefert. Die Stromversorgungseinrichtung 13 wird beispielsweise mittels einer Funk-Fernsteuerung 14 ein- oder ausgeschaltet und regelt des Weiteren die Leuchtstärke der Leuchtdioden 8.

Bei dem in Fig. 3 dargestellten strukturierten Flachglas 1 sind an den zwei Außenkanten 4, 5 und der Oberkante 7 jeweils eine LED-Schiene 9, die eine Anzahl von Leuchtdioden 8 enthält, befestigt. Die Strahlengänge der meisten Leuchtdioden verlaufen horizontal oder vertikal, während einzelne Leuchtdioden 8 schräg abstrahlen. Ebenso ist es ausführbar, an allen vier Außenkanten 4, 5, 6, 7 eines rechteckigen oder quadratischen Flachglases 1 LED-Schienen 9 anzubringen.

Anstelle der Leuchtdioden 8 bzw. LED-Schiene 9 können Glasfasern verwendet werden; deren Austrittsöffnungen die Leuchtdioden ersetzen, während an den Eintrittsöffnungen Lichtquellen angeordnet sind.

Die Strahlung der Leuchtdioden 8 ist bevorzugt weißes Licht. In einer weiteren Ausführungsform ist die Strahlung der Leuchtdioden 8 Licht einer anderen oder mehreren anderen Farben als weißes Licht. Ebenso ist es denkbar, dass die Strahlung einiger Leuchtdioden einer LED-Schiene 9 weißes Licht und die Strahlung der übrigen Leuchtdioden 8 der LED-Schiene 9 Licht einer anderen Farbe ist.

Zur Verstärkung der Beleuchtungseffekte sind die Rückseiten 3 der Flachgläser 1 verspiegelt oder mit einem Licht reflektierenden Lack ausgestattet.

Das erfindungsgemäße strukturierte Flachglas 1 ist für zahlreiche Anwendungen geeignet und kann in Gestalt einer Glastür, eines Glasfensters, Wandverkleidungsplatte, Tischplatte, eines Leuchtobjektes, eines Kunstgegenstandes, eines Glaswaschtisches, einer Umrandung von Spiegeln, einer Bodenplatte, von Glastreppenstufen eingesetzt werden.

## Patentansprüche

1. Strukturiertes Flachglas (1) und Leuchtdioden (8) für Beleuchtungszwecke, bei dem ein Teil des Flachglases (1) eine konvexe eingeprägte Struktur (2) aufweist und zumindest an einer der Außenkanten (4, 5, 6, 7) des Flachglases (1) die Leuchtdioden (8) angeordnet sind, deren Strahlung in das Innere des Flachglases (1) auf die konvexe eingeprägte Struktur (2) gerichtet ist **dadurch gekennzeichnet, dass** die konvexe eingeprägte Struktur (2) in die Rückseite (3) des Flachglases (1) durch Glasschmelzen eingeprägt und transparent ist und sich auf der Vorderseite des Flachglases (10) konvexe Erhebungen befinden, welche durch die Einprägungen der Struktur (2) verursacht sind, und der übrige Tell des Flachglases (1) eine gegenüber dem Teil des Flachglases (1) mit der eingeprägten Struktur (2) geringere Strukturierung aufweist.

2. Strukturiertes Flachglas nach Anspruch 1, **dadurch gekennzeichnet, dass** die Leuchtdioden (8) auf einer an sich bekannten LED-Schiene (9) angeordnet sind, die an einer der Außenkanten des Flachglases befestigt bzw. mit der Außenkante verbunden ist.

3. Strukturiertes Flachglas nach Anspruch 2, **dadurch gekennzeichnet, dass** die Leuchtdioden (8) in zwei Reihen auf der LED-Schiene (9) angeordnet sind.

4. Strukturiertes Flachglas nach den Ansprüchen 1 bis 3, **dadurch gekennzeichnet, dass** bei einem rechteckigen oder quadratischen Flachglas (1) je eine LED-Schiene (9) an zwei sich gegenüber liegenden Außenkanten (4, 5 bzw. 6, 7) angebracht ist.

5. Strukturiertes Flachglas nach den Ansprüchen 1 bis 3, **dadurch gekennzeichnet, dass** an drei (4, 5, 7 bzw. 4, 5, 6) oder allen vier Außenkanten (4, 5, 6, 7) LED-Schienen (9) angeordnet sind.

6. Strukturiertes Flachglas nach Anspruch 1, **dadurch gekennzeichnet, dass** die Strahlung der Leuchtdioden (8) weißes Licht ist, Licht einer anderen Farbe als weißes Licht oder mehreren anderen Farben als weißes Licht ist.

7. Strukturiertes Flachglas nach Anspruch 1, **dadurch gekennzeichnet, dass** die Strahlung einiger Leuchtdioden (8) einer LED-Schiene (9) weißes Licht und die Strahlung der übrigen Leuchtdioden (8) der LED-Schiene (9) Licht einer anderen Farbe ist.

8. Strukturiertes Flachglas nach Anspruch 1, **dadurch gekennzeichnet, dass** eine Stromversorgungseinrichtung (13), die an eine Netzversorgung (15) angeschlossen ist, die Leuchtdioden (8) mit elektrischer Energie beliefert.

9. Strukturiertes Flachglas nach Anspruch 8, **dadurch gekennzeichnet, dass** die Stromversorgungseinrichtung (13) mittels einer Funk-Fernsteuerung (14) die Leuchtstärke der Leuchtdioden (8) regelt und/oder ein- und ausschaltbar ist.

10. Strukturiertes Flachglas nach Anspruch 1, **dadurch gekennzeichnet, dass** die Struktur (2) die Form eines Landschaftsbildes, Familienwappens, von Initialen, einer Gemme, bei der das Bildmotiv in das Flachglas eingeprägt ist, von regel- oder unregelmäßigen Mustern aus Streifen, Punkten, Geraden, zusammenhängenden und/oder diskreten Flächenstücken hat.

11. Strukturiertes Flachglas nach einem oder mehreren der Ansprüche 1 bis 10, **dadurch gekennzeichnet, dass** die Struktur (2) in der Durchsicht transparent ist.

12. Strukturiertes Flachglas nach einem oder mehreren der Ansprüche 1 bis 11, **dadurch gekennzeichnet, dass** anstelle der LED-Schienen (9) Glasfasern vorgesehen sind, an deren Eintrittsöffnungen Lichtquellen angeordnet sind und deren Austrittsöffnungen die Leuchtdioden ersetzen.

13. Strukturiertes Flachglas nach einem oder mehreren der Ansprüche 1 bis 12, **dadurch gekennzeichnet, dass** die Rückseiten (3) der Flachgläser (1) verspiegelt oder mit einem Licht reflektierenden Lack ausgestattet sind.

14. Strukturiertes Flachglas nach Anspruch 1, **dadurch gekennzeichnet, dass** es gefärbt ist.

15. Strukturiertes Flachglas nach einem oder mehreren der Ansprüche 1 bis 14, **dadurch gekennzeichnet, dass** es die Form einer Glastür, eines Glasfensters, Wandverkleidungsplatte, Tischplatte, eines Leuchtobjektes, eines Kunstgegenstandes, eines Glaswaschtisches, einer Umrandung eines Spiegels, einer Bodenplatte, von Glastreppenstufen hat.

## Claims

1. Structured flat glass (1) and light-emitting diodes (8) for lighting purposes, in which part of the flat glass (1) has a convex, engraved structure (2), and the light-emitting diodes (8) are arranged at least on one of the outer edges (4, 5, 6, 7) of the flat glass (1), the radiation from said light-emitting diodes being directed into the interior of the flat glass (1) onto the convex, engraved structure (2), **characterized in that** the convex, engraved structure (2) is engraved into the rear side (3) of the flat glass (1) by glass-melting and is transparent, and convex elevations are provided on the front side of the flat glass (10), said elevations being caused by the impressions in the structure (2), and the remainder of the flat glass (1) has a slighter structuring in comparison with the part of the flat glass (1) with the engraved structure (2).

2. Structured flat glass according to Claim 1, **characterized in that** the light-emitting diodes (8) are arranged on an LED rail (9) known per se, which is fastened to one of the outer edges of the flat glass or is connected to the outer edge.

3. Structured flat glass according to Claim 2, **characterized in that** the light-emitting diodes (8) are arranged in two rows on the LED rail (9).

4. Structured flat glass according to Claims 1 to 3, **characterized in that**, in the case of a rectangular or square flat glass (1), in each case one LED rail (9) is fitted to two mutually opposite outer edges (4, 5 or 6, 7).

5. Structured flat glass according to Claims 1 to 3, **characterized in that** LED rails (9) are arranged on three (4, 5, 7 or 4, 5, 6) or all four outer edges (4, 5, 6, 7).

6. Structured flat glass according to Claim 1, **characterized in that** the radiation from the light-emitting diodes (8) is white light, light of a different colour than white light or a plurality of different colours than white light.

7. Structured flat glass according to Claim 1, **characterized in that** the radiation from some of the light-emitting diodes (8) in an LED rail (9) is white light and the radiation from the remainder of the light-emitting diodes (8) of the LED rail (9) is light of a different colour.

8. Structured flat glass according to Claim 1, **characterized in that** a power supply device (13) which is connected to a mains supply (15) supplies electrical energy to the light-emitting diodes (8).

9. Structured flat glass according to Claim 8, **characterized in that** the power supply device (13) regulates the luminous intensity of the light-emitting diodes (8) by means of radio remote control (14) and/or can be switched on and off.

10. Structured flat glass according to Claim 1, **characterized in that** the structure (2) has the form of a landscape image, a family crest, initials, an intaglio in which the image motif is engraved into the flat glass, regular or irregular patterns of strips, dots, straight lines, cohesive and/or discrete surface areas.

11. Structured flat glass according to one or more of Claims 1 to 10, **characterized in that** the structure (2) is transparent to look through.

12. Structured flat glass according to one or more of Claims 1 to 11, **characterized in that**, instead of the LED rails (9), fibre optics are provided, with light sources being arranged at the entry openings of said fibre optics, and the light-emitting diodes replacing the exit openings of said fibre optics.

13. Structured flat glass according to one or more of Claims 1 to 12, **characterized in that** the rear sides (3) of the flat glass sheets (1) are reflectively coated or are equipped with a light-reflecting paint.

14. Structured flat glass according to Claim 1, **characterized in that** it is coloured.

15. Structured flat glass according to one or more of Claims 1 to 14, **characterized in that** it has the form of a glass door, a glass window, a wall cladding panel, a tabletop, a light-emitting object, an artwork, a glass washstand, a mirror border, a base plate or glass steps.

## Revendications

1. Verre plat structuré (1) et diodes électroluminescentes (8) à des fins d'éclairage, dans lequel une partie du verre plat (1) présente une structure (2) estampée convexe et on agence au moins sur l'une des arêtes externes (4, 5, 6, 7) du verre plat (1) les diodes électroluminescentes (8), dont le rayonnement est dirigé à l'intérieur du verre plat (1) sur la structure (2) estampée convexe, **caractérisé en ce que** la structure (2) estampée convexe est estampée sur la face arrière (3) du verre plat (1) par fusion du verre et est transparente, tandis que des bossages convexes se trouvent sur la face avant du verre plat (10), lesquels bossages sont provoqués par les bossages de la structure (2), et la partie restante du verre plat (1) présente une structuration moindre par rapport à la partie du verre plat (1) dotée de la structure estampée (2).

2. Verre plat structuré selon la revendication 1, **caractérisé en ce que** les diodes électroluminescentes (8) sont agencées sur un rail de DEL (9) connu en soi, qui est fixé sur une des arêtes externes du verre plat ou est raccordé à l'arête externe.

3. Verre plat structuré selon la revendication 2, **caractérisé en ce que** les diodes électroluminescentes (8) sont agencées en deux rangées sur le rail de DEL (9).

4. Verre plat structuré selon les revendications 1 à 3, **caractérisé en ce que**, dans le cas d'un verre plat (1) rectangulaire ou carré, un rail de DEL (9) est respectivement appliqué sur deux arêtes externes (4, 5 ou 6, 7) en regard de l'autre.

5. Verre plat structuré selon les revendications 1 à 3, **caractérisé en ce que** des rails de DEL (9) sont agencés sur trois arêtes externes (4, 5, 7 ou 4, 5, 6) ou sur la totalité des quatre arêtes externes (4, 5, 6, 7).

6. Verre plat structuré selon la revendication 1, **caractérisé en ce que** le rayonnement des diodes électroluminescentes (8) est de la lumière blanche, de la lumière d'une autre couleur que la lumière blanche ou de plusieurs autres couleurs que la lumière blanche.

7. Verre plat structuré selon la revendication 1, **caractérisé en ce que** le rayonnement de certaines diodes électroluminescentes (8) d'un rail de DEL (9) est de la lumière blanche et le rayonnement des autres diodes électroluminescentes (8) du rail de DEL (9) est de la lumière d'une autre couleur.

8. Verre plat structuré selon la revendication 1, **caractérisé en ce qu'**un dispositif d'alimentation en courant (13), qui est connecté à une alimentation de réseau (15), approvisionne en énergie électrique les diodes électroluminescentes (8).

9. Verre plat structuré selon la revendication 8, **caractérisé en ce que** le dispositif d'alimentation en courant (13) régule la luminosité des diodes électroluminescentes au moyen d'une commande radio à distance (14) et/ou peut être connecté et déconnecté.

10. Verre plat structuré selon la revendication 1, **caractérisé en ce que** la structure (2) a la forme d'une image de paysage, d'armoiries familiales, d'initiales, d'une gemme, dans laquelle le motif d'image est estampé dans le verre plat, de motifs réguliers ou irréguliers constitués de bandes, de points, de lignes, de pièces plates continues et/ou discrètes.

11. Verre plat structuré selon l'une quelconque ou plusieurs des revendications 1 à 10, **caractérisé en ce que** la structure (2) est transparente à la vue.

12. Verre plat structuré selon l'une quelconque ou plusieurs des revendications 1 à 11, **caractérisé en ce qu'**en lieu et place des rails de DEL (9), on prévoit des fibres de verre, aux ouvertures d'entrée desquelles sont agencées des sources de lumière et dont les ouvertures de sortie remplacent les diodes électroluminescentes.

13. Verre plat structuré selon l'une quelconque ou plusieurs des revendications 1 à 12, **caractérisé en ce que** les faces arrière (3) des verres plats (1) sont étamées ou pourvues d'un vernis réfléchissant la lumière.

14. Verre plat structuré selon la revendication 1, **caractérisé en ce qu'**il est coloré.

15. Verre plat structuré selon l'une quelconque ou plusieurs des revendications 1 à 14, **caractérisé en ce qu'**il se présente sous la forme d'une porte vitrée, d'une fenêtre vitrée, d'une plaque de revêtement murale, d'un dessus de table, d'un objet lumineux, d'un objet d'art, d'un lavabo en verre, d'un encadrement d'un miroir, d'une plaque de sol et de marches en verre.
